# EUROPEAN PATENT APPLICATION

(11) **EP 4 592 665 A1**
(43) Date of publication of application: **30.07.2025**
(21) Application number: 24198105.9
(22) Date of filing: 03.09.2024
(51) Int. Cl.: G01N 1/28, B25B 1/24, B23Q 3/06, B25B 1/20, B25B 5/14, G01N 1/04

(54) **MULTI-DIRECTIONAL VISE DEVICE AND METHOD OF CUTTING MULTI-DIRECTIONAL SPECIMENS USING THE SAME**

(30) Priority: 26.01.2024 KR 20240012234
(71) Applicant: Dcseng Co., Ltd., Cheongju-si, Chungcheongbuk-do 28214 (KR)
(72) Inventor: CHOI, Insung, 34035 Daejeon (KR)
(74) Representative: Kraus & Lederer PartGmbB

(57) **Abstract**

Provided is a multi-directional vise device, and more particularly, a multi-directional vise device, which holds and guides a specimen having a length in one direction to cut the specimen in multiple directions, the device comprising: a first body part and a second body part facing each other and spaced apart from each other by a certain gap in a second direction vertical to a first direction while having the first direction, which is a length direction of the specimen, as a reference axis; at least one jig part disposed in each portion of the first body part and the second body part that accommodates the specimen; and a compression part adjusting the gap between the first body part and the second body part, wherein at least one of the first body part and the second body part has at least a portion of its upper side that includes a cut part formed in the second direction.

## Description

### CROSS-REFERENCE TO RELATED APPLICATIONS

This application claims priority under 35 U.S.C. §119 to Korean Patent Application No. 10-2024-0012234, filed on January 26, 2024, in the Korean Intellectual Property Office, the disclosure of which is incorporated herein by reference in its entirety.

### TECHNICAL FIELD

The following disclosure relates to a multi-directional vise device that may fix a specimen and then guide the specimen in multiple directions to be cut when cutting the specimen in the multiple directions, and a method of cutting multi-directional specimens using the same.

### BACKGROUND

Welding may be performed on a portion of a specimen for quality purposes depending on the purpose and need for use of the specimen. In order to perform the welding based on the material and purpose of the specimen, welding work may be performed by appropriately selecting various requirements such as a welding method, welding equipment, a welding position, a welding material, and a welding environment, thereby acquiring a desired welding result, and mass work processing may be performed later based on each selected variable.

Here, in the welding work, a quality test may be performed to check a quality of a partial weld through appropriate test and measurement after the welding, and the welding work may require a refining process based thereon. In general, the quality test may include a visual inspection, non-destructive testing (NDT), heat treatment evaluation, mechanical testing, or the like.

Among these tests, the visual inspection refers to directly checking a welded part for its surface defects, welding unevenness, cracks, or welding abnormalities, and may be the most intuitive, easy, and convenient method to perform the inspection. The inspection may be performed by directly looking at the inside of the specimen if the specimen has a large diameter when performing the visual inspection on the welding that is performed on the inside of the specimen. However, it may be difficult to directly check the inside if the specimen has a small diameter, and it is thus necessary to cut the welded part or its nearby portion. Here, in order to cut the inside of the specimen sufficiently to test the welded part, at least a portion of the specimen is required to be opened, which requires cutting the specimen in at least vertical and horizontal directions in order to open a portion of the specimen.

However, conventional devices that may assist in fixing and cutting the specimen have limitations in fixing the specimen stably. In particular, the specimen may be a pipe type having a circular outer surface. In this case, it may be difficult to cut the specimen at an exact position unless the specimen is fixed stably and firmly. For example, the specimen may be fixed using a clamp or other means, and its necessary portion may then be cut using a saw. Here, an existing fix device is unable to effectively control a force and vibration caused by the saw, which results in a limitation in precise cutting work. In addition, even when requiring the cutting in multiple directions, the conventional fixing means allow a worker to cut the specimen in the multiple directions only by changing a direction of the saw while fixing the specimen to one position. Therefore, it may be difficult to perform the work while maintaining the exact dimensions and shape of the welded part of the specimen or guarantee stability and accuracy of the welded part, which results in limitations in the precise cutting work. In addition, performing the cutting manually using a hacksaw may take a lot of time.

### SUMMARY

An embodiment of the present disclosure is directed to providing a multi-directional vise device that may assist precise cutting work by firmly fixing a specimen and also guiding each cutting in multiple directions when cutting the specimen to test its welding quality, and a method of cutting the multi-directional specimens using the same.

An embodiment of the present disclosure is also directed to providing a multi-directional vise device that may fix a specimen more firmly and provide a more precise guidance on a position of the specimen to be cut when cutting the specimen required to be cut manually using a power tool such as a jigsaw.

In one general aspect, provided is a multi-directional vise device, which holds and guides a specimen having a length in one direction to cut the specimen in multiple directions, the device including: a first body part and a second body part facing each other and spaced apart from each other by a certain gap in a second direction vertical to a first direction while having the first direction, which is a length direction of the specimen, as a reference axis; at least one jig part disposed in each portion of the first body part and the second body part that accommodates the specimen; and a compression part adjusting the gap between the first body part and the second body part, wherein at least one of the first body part and the second body part has at least a portion of its upper side that includes a cut part formed in the second direction.

The first body part may include the cut part, and the jig part may be divided into two by the cut part.

The device may further include an upper plate disposed on the body part, accommodating the first body part and the second body part together, and including a guide part perforated in the upper plate in the first direction.

The upper plate may include a rotation shaft fixed thereto together with the body part, and the upper plate may be rotated based on the rotation shaft in the first direction or the second direction.

The upper plate may have a shape of a rectangle having a longer length in the first direction, and the rotation shaft may be fixed to the upper plate together with the body part in a predetermined portion between a position close to a central portion of the upper plate in the length direction among edges of the upper plate, and an edge of the body part including the cut part.

The upper plate may further include a stopper having a length in the second direction, and movable on the upper plate in the first direction.

The upper plate may include a sliding groove disposed in each of two sides of the upper plate in the second direction and having a length in the first direction, and each of two ends of the stopper may be fixed to each sliding groove, and slid on the upper plate.

The device, in which one end of the upper plate is on the same line as one end of each of the first body part and the second body part, may further include an upper plate fixing part fixing the position of the upper plate by being disposed on one side of the body part, which includes the cut part, and by being in surface contact with a side of the body part and a side of the upper plate together.

The jig part may have an inner circumferential surface formed along an outer circumference of the specimen.

The specimen may include a welded part welded along a circumference of at least a portion of the specimen, and the jig part may include a weld groove accommodating the welded part.

The jig part may be detachable from the body part.

The compression part may have a cylindrical structure.

In another general aspect, provided is a method of cutting multi-directional specimens, which cuts the specimen in multiple directions using the multi-directional vise device of the present disclosure, the method comprising: step a) of seating the specimen on a jig part by disposing the specimen to have a length direction parallel to a first direction; step b) of fixing the specimen by adjusting a gap between a first body part and a second body part by using a compression part; step c) of guiding the cutting of the specimen in the first direction by rotating an upper plate for a guide part of the upper plate to be parallel to the first direction based on a rotation shaft; and step d) of guiding the cutting of the specimen in a second direction by rotating the upper plate for the guide part of the upper plate to be parallel to the second direction based on the rotation shaft.

Other features and aspects will be apparent from the following detailed description, the drawings, and the claims.

### BRIEF DESCRIPTION OF THE DRAWINGS

FIG. 1 is a perspective view of a specimen having a cut portion according to an embodiment.
FIG. 2 is perspective views of a multi-directional vise device and the specimen according to an embodiment.
FIG. 3 is a rear perspective view of the multi-directional vise device according to an embodiment.
FIG. 4 is a plan view of the multi-directional vise device according to an embodiment.
FIG. 5 is a perspective view of the multi-directional vise device where the specimen is fixed while an upper plate is disposed in a first direction according to an embodiment.
FIG. 6 is a front view of the multi-directional vise device where the specimen is fixed while the upper plate is disposed in the first direction according to an embodiment.
FIG. 7 is a perspective view of the multi-directional vise device where the specimen is fixed while the upper plate is disposed in a second direction according to an embodiment.
FIG. 8 is a perspective view of the multi-directional vise device where the specimen is fixed while a stopper of the upper plate is moved according to an embodiment.
FIG. 9 is a perspective view of the multi-directional vise device to which a cutting tool is fixed according to an embodiment.

### DETAILED DESCRIPTION OF EMBODIMENTS

The above-mentioned objects, features, and advantages will become more obvious from the following embodiments provided in relation to the accompanying drawings. The following descriptions of specific structures and functions are provided as examples only to describe the embodiments based on a concept of the present disclosure. Therefore, the embodiments of the present disclosure may be implemented in various forms, and the present disclosure is not limited to the embodiments described in the specification or the present application. The embodiments of the present disclosure may be variously modified and may have several forms, and specific embodiments are thus shown in the accompanying drawings and described in detail in the specification or the present application. However, it is to be understood that the present disclosure is not limited to the specific embodiments, and includes all modifications, equivalents, and substitutions, included in the spirit and scope of the present disclosure. Terms such as "first", "second", and the like may be used to describe various components, and the components are not to be construed as being limited to the terms. The terms are used only to distinguish one component and another component from each other. For example, a "first" component may be named a "second" component and the "second" component may also be named the "first" component, without departing from the scope of the present disclosure. It is to be understood that when one component is referred to as being "connected to" or "coupled to" another component, the corresponding component may be connected or coupled directly to another component or connected or coupled to another component with a third component interposed therebetween. On the other hand, it is to be understood that when one component is referred to as being "connected directly to" or "coupled directly to" another component, one component may be connected to or coupled to another component without another component interposed therebetween. Other expressions to describe a relationship between the components, i.e., "-between" and "directly between" or "adjacent to" and "directly adjacent to", should be interpreted in the same manner as above. Terms used in the specification are used to describe the specific embodiments, and are not intended to limit the present disclosure. A term of a single number may include its plural number unless explicitly indicated otherwise in the context. It is to be understood that a term "include", "have", or the like used in the specification specifies the existence of features, numerals, steps, operations, components, parts or combinations thereof, and does not preclude the existence or addition of one or more other features, numerals, steps, operations, components, parts or combinations thereof. Unless otherwise defined, all terms including technical and scientific terms used herein have the same meanings as those commonly understood by those skilled in the art to which the present disclosure pertains. It is to be further understood that terms such as those defined in commonly used dictionaries should be interpreted as having meanings consistent with their meanings in the context of the relevant art and are not to be interpreted in an idealized or overly formal sense unless expressly so defined herein. Hereinafter, the embodiments of the present disclosure are described in detail with reference to the accompanying drawings. Like reference numerals denote like components throughout the drawings.

As a vise device that may be used to cut a portion of a specimen 10 having a length in one direction as needed, a multi-directional vise device 1000 according to the present disclosure may hold and then firmly fix the specimen 10 regardless of its size, external shape, type, or the like, and guide the fixed specimen 10 to be cut in multiple directions. Here, according to an embodiment, the multi-directional vise device 1000 in the present disclosure may be used to test welding performed on the specimen 10 having a pipe shape. In particular, if it is difficult to check the inside of the specimen 10 due to its small diameter, the device 1000 may hold and fix the specimen 10 and guide its cut position in the multiple directions when checking an internal welding state of the specimen 10 by cutting its portion in the multiple directions.

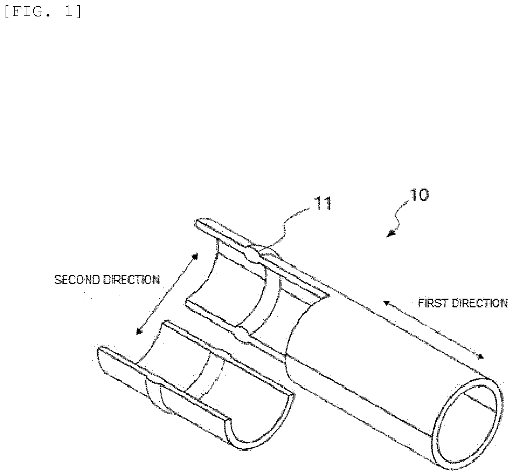

To describe with reference to FIG. 1, the specimen 10 in the present disclosure may have the shape of a pipe having a length, and include a welded part 11 welded along a circumference of a predetermined portion of the specimen. In addition, to check a state of the welded part 11 of the specimen 10, the inside of the specimen 10 may be checked by cutting the same in a length direction and a direction vertical thereto. Here, there are several methods to cut the specimen 10 to check its inside. However, to implement a simplified method, the device 1000 in the present disclosure may first cut a portion of the specimen 10 that includes the welded part 11 along the length direction, and cut a portion of a cross-section of the specimen 10 in a radial direction from its one cut end, thereby performing the cutting to open at least half of an area of the specimen 10. Here, the length direction of the specimen 10 may be referred to as a first direction, and the radial direction vertical to the length direction may be referred to as a second direction. Therefore, the multi-directional vise device 1000 in the present disclosure may guide the cutting of the specimen 10 in the first direction and the second direction while fixing the specimen 10.

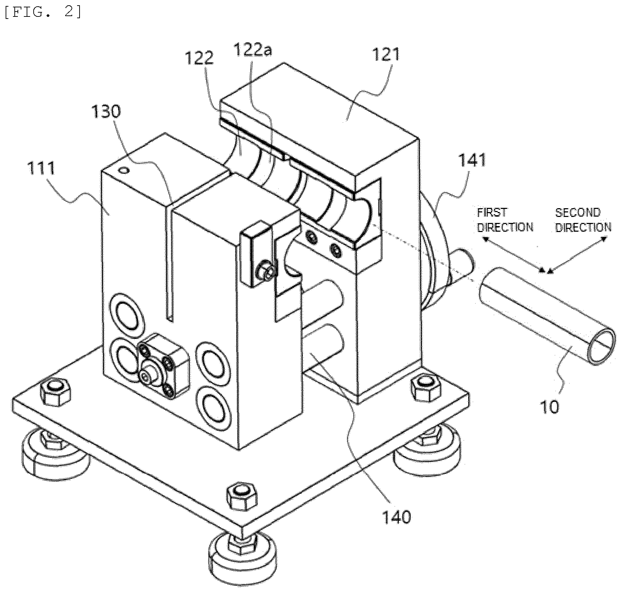

Accordingly, to describe with reference to FIGS. 2 to 4, the multi-directional vise device 1000, which holds and guides the specimen 10 having a length in one direction to cut the specimen 10 in the multiple directions, may include: a first body part 111 and a second body part 112 facing each other and spaced apart from each other by a certain gap in the second direction vertical to the first direction while having the first direction, which is the length direction of the specimen 10, as a reference axis; at least one jig part 120 disposed in each portion of the first body part 111 and the second body part 112 that accommodates the specimen 10; and a compression part 140 adjusting the gap between the first body part 111 and the second body part 112, wherein at least one of the first body part 111 and the second body part 112 has a portion of its upper side that includes a cut part 130 in the second direction.

The device 1000 in the present disclosure may include a body part 110 which may hold and fix the specimen 10. Here, the body part 110 in the present disclosure may be divided into at least two parts, and the pair of body parts 110 may be in contact with two ends of the specimen 10 and tighten the specimen 10 to thus hold and fix the specimen 10. Accordingly, the body part 110 in the present disclosure may include the first body part 111 and the second body part 112, and the first body part 111 and the second body part 112 may face each other and be spaced apart from each other by the certain gap in the direction vertical to the length direction of the specimen 10. Here, the first body part 111 and the second body part 112 may have sizes and shapes corresponding to each other. Accordingly, the specimen 10 may be disposed between the first body part 111 and the second body part 112, the gap between the first body part 111 and the second body part 112 may be adjusted by the compression part 140, and the body parts 111 and 112 may fix the specimen 10 by wrapping around the circumference of the specimen 10.

To describe in more detail with reference to FIGS. 1 to 4, the first body part 111 and the second body part 112 may respectively be disposed on two sides of the specimen 10 in the second direction and spaced apart from each other by the certain gap to accommodate portions of the circumference of the specimen 10. That is, the first body part 111 and the second body part 112 may face each other in the second direction, based on the first direction. Accordingly, the body part 110 may guide the cutting in the first direction while simply fixing the specimen 10. Each of the first body part 111 and the second body part 112 may have a certain width in a direction parallel to the length direction of the specimen 10 to accommodate a partial length of the specimen 10. That is, the specimen 10, which has a length, may be held for its partial length to be accommodated in each body part. Accordingly, each of the first body part 111 and the second body part 112 may accommodate each portion of the circumference of the specimen 10. In addition, the gap between the first body part 111 and the second body part 112 may be adjusted by being narrower or wider in the second direction by the compression part 140.

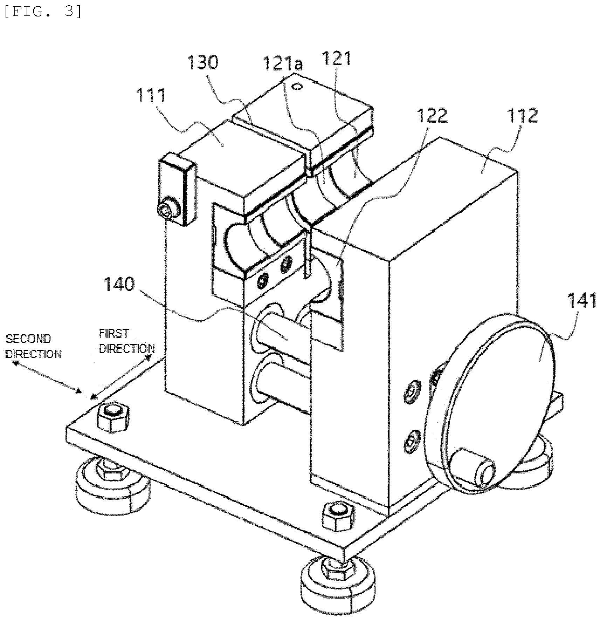

In addition, the device 1000 may include the jig part 120 disposed in the body part 110 and directly gripping an outer circumferential surface of the specimen 10. The jig part 120 may be disposed at a position in the body part 110, where the specimen 10 is required to be accommodated, and the plurality of the jig part 120 may be provided as needed to fix the specimen 10 more stably. Referring to FIGS. 2 and 3, the first body part 111 or the second body part 112 may include at least one jig part 121 or 122. Here, the jig parts 121 and 122 may respective be disposed at portions of the body part 110 that are adjacent to each other, and may each be disposed to adjacent to an upper side of the body part 110 to facilitate the cutting of the specimen 10. That is, the jig part 120 may be disposed at the same position where the first body part 111 and the second body part 112 are in contact with each other at their inner upper sides facing each other.

In addition, the jig part 120 may have an inner circumferential surface formed along an outer circumference of the specimen 10. Here, the inner circumferential surface of the jig part 120 may be a portion that directly accommodates the specimen 10, and the jig part 120 may be disposed on the inner circumferential surface while having various shapes as needed or based on a type of the specimen 10. In addition, the jig part 120 may be made of a material that easily fixes the specimen 10. For example, the jig part 120 may be made of an elastic material to actively accommodate the specimen 10 regardless of its size and shape. In addition, the jig part 120 may be detachable from the body part 110. Accordingly, the jig parts 120 may have various types of inner circumferential portions and be replaced in the body part 110 as needed to thus accommodate various types of specimens 10. The body part 110 in the present disclosure may include the plurality of jig parts 120. Here, the jig parts 120 may have different inner circumferential surface shapes. In addition, all the jig parts 120 may be manufactured to have the same inner circumferential surface in order to facilitate their productions. For example, in order to be used more universally in response to an appearance of the specimen 10, the jig part 120 may have a triangular groove formed in a portion of its inner circumferential surface. In addition, the jig part 120 may have the same shape as the outer circumference of the specimen 10, and if the specimen 10 has the pipe shape, the jig part 120 may include the inner circumferential surface in the shape of a semicircle. Here, regarding a radius size of the semicircular inner circumferential portion of the jig part 120, the jig part 120 may have various sizes as needed to thus be replaced and used as needed.

The multi-directional vise device 1000 according to an embodiment of the present disclosure may be a device that may assist in the cutting of the specimen 10 to check its internal welding state, and the specimen 10 may include the welded part 11 formed along an outer diameter of at least a portion thereof. Here, as shown in FIG. 1, the welded part 11 may partially protrude outward from the specimen 10. Accordingly, as shown in FIGS. 2 and 3, the jig part 121 or 122 in the present disclosure may further include a weld groove 121a or 122a accommodating the welded part 11 in its inner circumferential surface in order to support the specimen 10 while accommodating the welded part 11 together. Therefore, the weld groove 121a or 122a may be depressed in the inner circumferential surface of the jig part 121 or 122. Therefore, when the specimen 10 is held in the jig part 121 or 122, the welded part 11 of the specimen 10 may escape into the weld grooves 121a and122a, and the jig parts 121 and 122can thus fix the specimen 10 more stably.

The compression part 140 may adjust the gap between the first body part 111 and the second body part 112, which are spaced apart from each other, and adjust the gap between the first body part 111 and the second body part 112 to be narrower or wider. That is, the compression part 140 may move the body part in the second direction. The compression part 140 may have no restrictions as long as the compression part 140 is a device that may adjust the gap between the body parts 111 and 112. Referring to FIGS. 2 to 4, the compression part 140 according to an embodiment of the present disclosure may have a cylindrical structure. Accordingly, the compression part 140 may include at least one guide rod passing through the first body part 111 and the second body part 112, and allowing one of the first body part 111 and the second body part 112 to reciprocate toward the other body part by its driving force. Here, the first body part 111 may reciprocate toward the second body part 112. In addition, the compression part 140 may include a compression handle 141 adjacent to the second body part 112, and thus be driven in such a way that the first body part 111 reciprocates by rotating the compression handle 141 to thus adjust the gap between the body parts.

A predetermined gap in the first direction may be formed by the gap between the first body part 111 and the second body part 112, and the first body part 111 and the second body part 112 may thus be spaced apart from each other in the second direction based on the first direction. Accordingly, the gap between the first body part 111 and the second body part 112 may be narrowed by the compression part 140 to thus fix the specimen 10. In this case, the body part 110 in the present disclosure may guide the cutting of the specimen 10 in the first direction along the predetermined gap. In addition, in the body part in the present disclosure, at least one of the first body part 111 and the second body part 112 may include the cut part 130 in the second direction, and guide the cutting of the specimen 10 in the second direction. Here, the cut part 130 may be formed in at least a portion of the upper side of the body part, or one body part may be divided into two by the cut part 130. However, in order to smooth the movement of the body part that is caused by the compression part 140, the body part 110, which includes the cut part 130, may include the cut part 130 only in a portion, and the compression part 140 may be connected to an integrated portion of the body part 110, thereby allowing the corresponding body parts 110 to be simultaneously moved together. The cut part 130 may have its entire area cut in the second direction while having at least a partial area of the upper side of the body 110 that is cut. The cut part 130 may be formed in the center of the area of the body part 110 in the first direction, and have a cut level enabling a cut blade that cuts the specimen 10 to be sufficiently inserted into the cut part 130.

For example, to describe in more detail with reference to FIGS. 2 to 4, the first body part 111 may include the cut part 130 formed by cutting a portion of its upper side in the second direction. Accordingly, when viewing the multi-directional vise device 1000 in the present disclosure from the top, in the first body part 111 and the second body part 112, which has the corresponding sizes and face each other, the first body part 111 may be divided into two based on the cut part 130 compared to the second body part 112. That is, the body part 110 in the present disclosure may include three parts, and each third part may be formed by the gap in the first direction or the second direction. Accordingly, the multi-directional vise device 1000 in the present disclosure may fix the specimen 10, and then guide the specimen 10 in the first direction for the cutting of the specimen 10 in the length direction or the second direction for the cutting of the specimen 10 in the radial direction, based on the divided positions. Here, in the multi-directional vise device 1000, a length of the gap formed in the first direction may be longer than a length of the cut part 130 in the second direction due to the size of each body part 110.

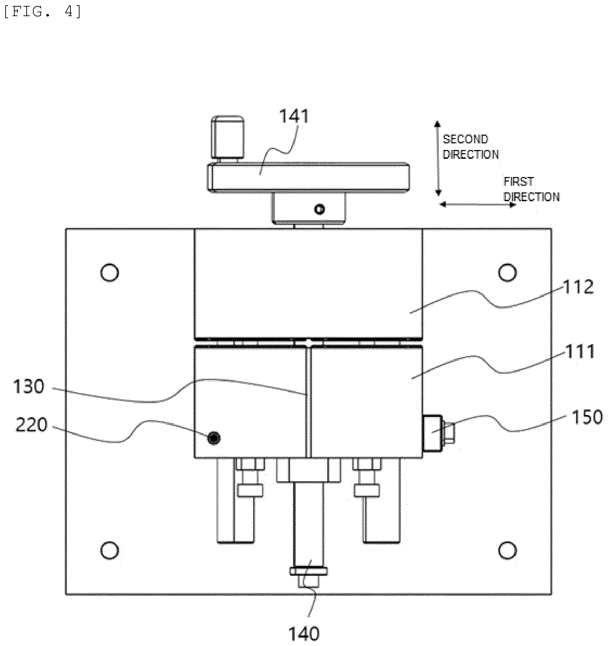

In addition, referring to FIG. 4, the first body part 111 may be divided into two upper portions by the cut part 130, and the jig part 121 disposed on the upper side of the body part may thus also be divided into two. That is, the device 1000 in the present disclosure may include at least three jig parts 121 and 122. The first body part 111 may include the cut part 130 at least in the portion where the jig part 121 is disposed, and the jig parts 121 may be disposed on two sides of the first body part 111 based on the cut part 130. Here, the second body part 112 may include the jig part 122 having a length along a width of the second body part 112, and include the plurality of jig parts 122 as needed. According to an embodiment of the present disclosure, four jig parts 121 and 122 formed in the same shape may be provided. Here, the pair of jig parts 121 may respectively be divided into two portions of the first body, and the other pair of jig parts 122 may face each other while being disposed to correspond to the jig parts of the first body in the second body part 112.

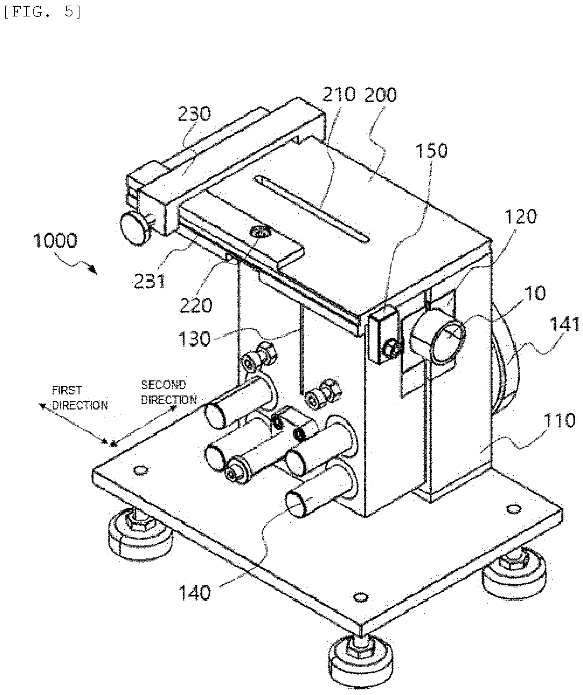

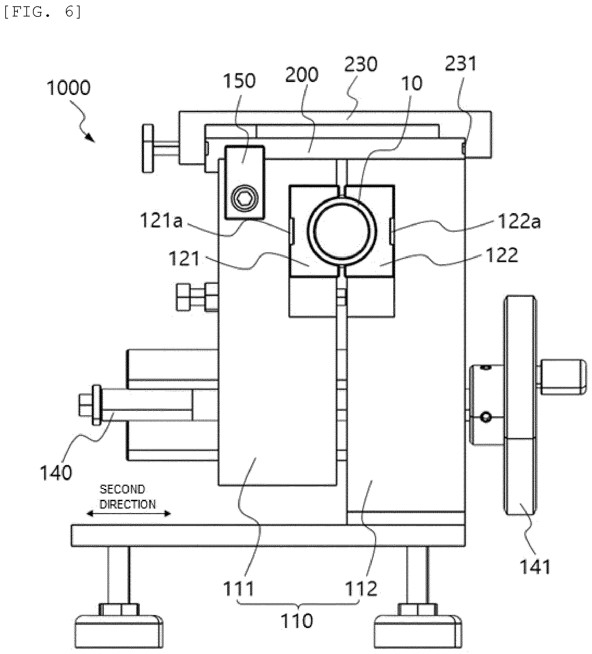

In addition, referring to FIGS. 5 and 6, the multi-directional vise device 1000 may further include an upper plate 200 disposed on the body part 110, accommodating the first body part 111 and the second body part 112 together, and including a guide part 210 perforated in the upper plate 200 in the first direction. Here, the upper plate 200 may be disposed on the upper side of the body part 110, and have a size enabling the upper plate 200 to accommodate an upper area of the body part 110, which is at least an area where the first body part 111 and the second body part 112 are disposed by narrowing the gap therebetween. FIG. 5 is a perspective view of the multi-directional vise device 1000 where the upper plate 200 is disposed in the first direction. The guide part 210 may be perforated in a partial area of the upper plate 200 along a gap in the first direction that is formed by the gap between the first body part 111 and the second body part 112. That is, the guide part 210 may be perforated in a direction parallel to the gap at a position allowing the guide part 210 to be disposed on the same axis as the gap between the body parts when the first body portion 111 and the second body portion 112 are adjacent to each other by the compression portion 140. A length of the guide part 210 has no restrictions as long as the length allows the guide part 210 to be accommodated in the upper plate 200. For convenience, the guide part 210 may be disposed in a central side of the upper plate 200. Here, the perforation of the guide part 210 may have a length in the first direction, or have a shape of a cross having lengths in the first direction and the second direction as needed. Here, the perforation formed in the second direction may correspond to the cut part 130.

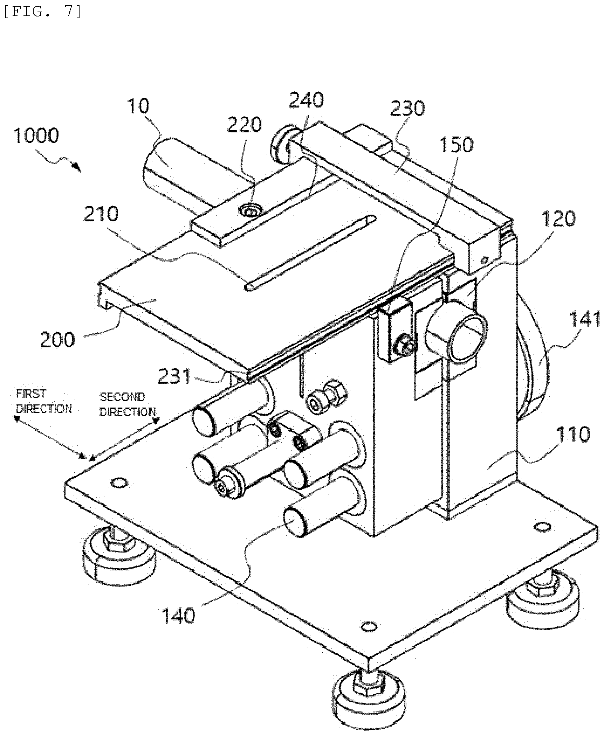

The upper plate 200 in the present disclosure may be moved on the upper side of the body part 110. Here, referring to FIGS. 5 and 7, the upper plate 200 may be moved for the guide part 210 formed in the first direction to be rotated at least 90 degrees to thus be horizontal in the second direction. The upper plate 200 in the present disclosure may include a rotation shaft 220 that is fixed thereto together with the body part 110, and the upper plate 200 may be rotated based on the rotation shaft 220 in the first direction or the second direction.

The rotation shaft 220 may allow the upper plate 200 to be rotatable while passing through and being fixed to the upper plate 200 and the body part 110. That is, the rotation shaft 220 may allow the upper plate 200 to be rotatable on the upper side of the body part 110 based on the rotation shaft 220 while fixing the upper plate 200 to the body part 110. FIG. 5 is a perspective view of the multi-directional vise device 1000 while the upper plate 200 is rotated in the first direction, and FIG. 7 is a perspective view of the multi-directional vise device 1000 while the upper plate 200 is rotated in the second direction. Referring to FIGS. 5 and 7, when the upper plate 200 is first disposed for the guide part 210 to be parallel to the first direction, the upper plate 200 may be rotated in the second direction by the rotation shaft 220, and the guide part 210 may thus be rotated in a direction parallel to the second direction.

In addition, the upper plate 200 may have a shape of a rectangle having a longer length in the first direction, and the rotation shaft 220 may be fixed to the upper plate 200 together with the body part in a predetermined portion between a position close to a central portion of the upper plate 200 in the length direction among edges of the upper plate 200, and an edge of the body part 110 including the cut part 130. To describe in more detail with reference to FIG. 5, the upper plate 200 may have the shape of a rectangle having a width enabling the upper plate 200 to accommodate the first body part 111 and the second body part 112 and a longer length in the first direction. In addition, the upper plate 200 may have a reference position where its one end is disposed on the same line as one end of the body part 110 when the upper plate 200 is disposed while having its length facing the first direction. That is, as shown in FIG. 5, the upper plate 200 may have the reference position where one end of the upper plate 200 is disposed on the same line as one end of the body part 110, and the other end of the upper plate 200 protrudes more than the other end of the body part 110. In addition, the rotation shaft 220 may be fixed to the body part 110, including the cut part 130, among the first body part 111 and the second body part 112. Here, the first body part 111 may include the cut part 130. Based on the reference position of the upper plate 200, the rotation shaft 220 may be disposed at an edge of the first body part 111, i.e., the same vertical line as the first body part 111, between two sides in the area of the upper plate 200 in the second direction, and fix the central portion of the upper plate 200 in the length direction. Therefore, when formed by passing through the upper plate 200 and the body part 110 together, the rotation shaft may be disposed on the other edge of the first body part 111 based on the reference position of the upper plate 200, and disposed on a central edge of the upper plate 200 that is adjacent to the first body part 111. Accordingly, the upper plate 200 may be rotated based on the rotation shaft 220 in the first direction or the second direction while the edge of the upper plate 200 is fixed.

Here, based on the reference position of the upper plate 200 as shown in FIG. 5, one end of the upper plate 200 may be on the same line as one end of each of the first body part 111 and the second body part 112. Therefore, when it is necessary to cut the length of the specimen 10 in a process of the specimen 10, the specimen 10 may be inserted into the multi-directional vise device 1000, and the multi-directional vise device 1000 assists in cutting one end of the specimen 10 by using one end of the device 1000.

The upper plate 200 in the present disclosure may be rotated while its portion and the body part 110 are fixed to each other. Here, the upper plate 200 may be rotatable, and in order to fix the position of the upper plate 200, the multi-directional vise device 1000 of the present disclosure may further include an upper plate fixing part 150 that may fix the position of the upper plate 200 by being in surface contact with one side of the body part 110 and one side of the upper plate 200 together. Referring to FIGS. 5 to 7, the upper plate fixing part 150 may be disposed on an upper end of the body part 110 to facilitate the surface contact between the upper plate 200 and the body part 110. The upper plate fixing part 150 may have a shape of a block having a predetermined length. While being vertical to the ground, the block may have one end fixed to be in surface contact with one side of the body part 110. Here, the upper plate fixing part 150 may further include the rotation shaft 220, one end of the upper plate fixing part 150 may be fixed by the rotation shaft 220, and the other end of the block may be rotated freely. Here, one end of the upper plate fixing part 150 may be a portion facing a lower side of the body part 110. In addition, the other end of the upper plate fixing part 150 may protrude upward from the body part 110. Therefore, the upper plate fixing part 150 may fix the position of the upper plate 200 by having its lower end fixed while being in surface contact with the side of the body part 110 by the rotation shaft 220, and its portion protruding upward from the body part 110 that is in surface contact with the side of the upper plate 200. Here, the upper plate fixing part 150 may be fixed vertically onto one side of the first body part 111 based on the reference position of the upper plate 200.

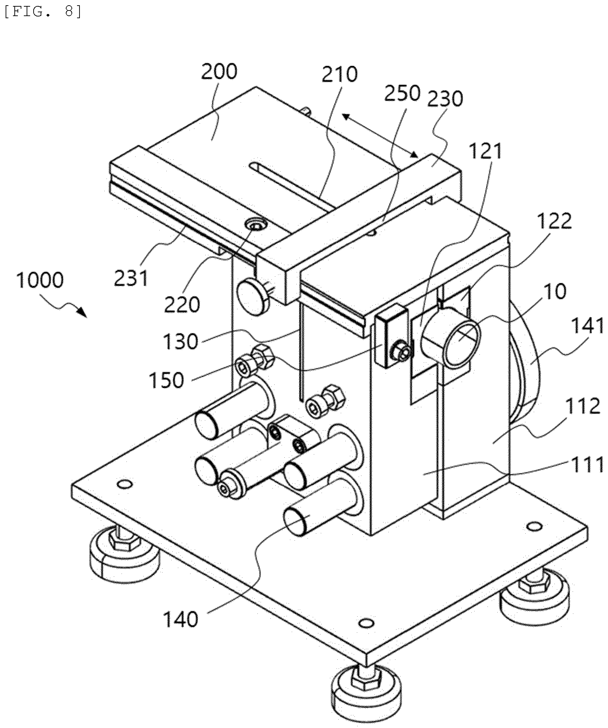

In addition, referring to FIGS. 5 and 8, the upper plate 200 may further include a stopper 230 having a length in the second direction, and movable on the upper plate 200 in the first direction. Here, the stopper 230 may adjust the length of the guide part 210, and have a length on the upper plate 200 in a direction perpendicular to the length of the guide part 210. That is, the stopper 230 may have a shape of a bar having a length in a width direction of the upper plate 200, and be moved on the upper plate 200 in the first direction. To describe based on the reference position of the upper plate 200, when the length direction of the upper plate 200 is the first direction, the stopper 230 having a length in the second direction perpendicular to the length direction of the upper plate 200 may be moved on the upper plate 200 in the length direction of the upper plate 200. Next, FIG. 8 is a perspective view of the multi-directional vise device 1000 where the upper plate 200 is disposed in the reference position and the stopper 230 is moved on the upper plate 200 as needed. As shown in FIG. 8, the length of the guide part 210 perpendicular to the length of the stopper 230 may be restricted based on the position of the stopper 230.

The stopper 230 may be moved freely along the length of the upper plate 200 within the upper plate 200. Here, the stopper 230 has no restrictions as long as the stopper 230 may be moved freely on the upper plate 200. According to an embodiment of the present disclosure, referring to FIGS. 7 and 8, the upper plate 200 may include a sliding groove 231 disposed in each of two sides of the upper plate 200 in the second direction and having a length in the first direction, and each of two ends of the stopper 230 may be fixed to each sliding groove 231. Accordingly, in the present disclosure, the stopper 230 may be slid on the upper plate 200. To describe based on the reference position of the upper plate 200, the upper plate 200 may be oriented with its length facing the first direction, and the sliding groove 231 may thus be disposed in the side of each end of the upper plate 200 in the width direction and depressed in the length direction of the upper plate 200. Accordingly, each of the two ends of the stopper 230 in the length direction may be inserted into each sliding grooves 231 and slide-moved in the sliding groove 231, thereby adjusting the position of the stopper 230 on the upper plate 200. Here, one of the twp ends of the stopper 230 may include a bolt, and the position of the stopper 230 may be fixed onto the upper plate 200 by tightening the bolt toward the sliding groove 231. The stopper 230 may be used as a support surface 250 for the power tool when the specimen is long.

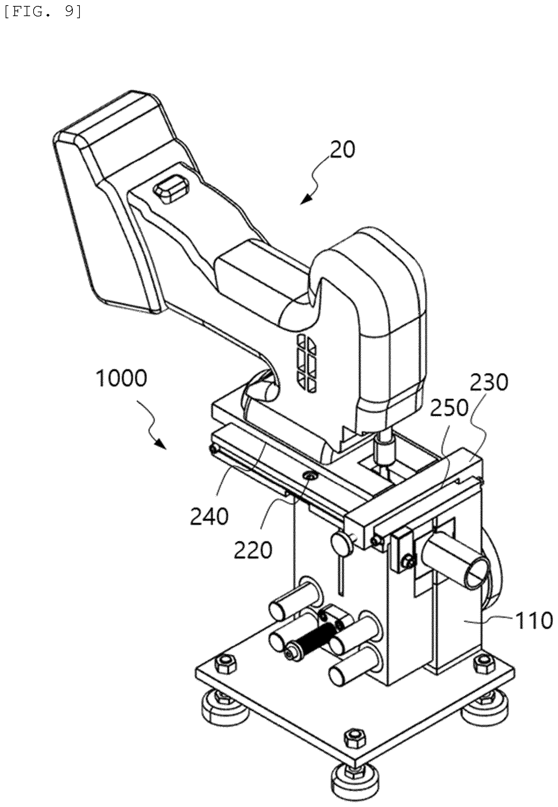

In addition, to describe in more detail with reference to FIGS. 7 and 9, the multi-directional vise device 1000 in the present disclosure may fix the specimen to the body part 110, and then use a cutting tool 20, such as the power tool, to thus cut the specimen along the guide part 210. Here, in order for the cutting tool 20 to perform precise cutting, the upper plate of the multi-directional vise device 1000 may include a first support surface 240 that may support a partial surface of the cutting tool 20. The first support surface 240 may be disposed on the upper plate 200. A block having a predetermined height may be disposed along an edge of a portion where the rotation shaft 220 is disposed at the upper plate 200, and a side height of the block may form the first support surface 240. The support surface 240 may be in contact with a portion of the cutting tool 20, and moved along the guide part 210 while closely supporting a partial position of the cutting tool 20. Accordingly, the cutting tool 20 may perform work along the first support surface 240 while the partial position of the cutting tool 20 is closely supported on the first support surface 240 despite vibration occurring during its operation, and thus may perform the cutting in a precise position. In addition, referring to FIG. 8, when the specimen 10 is long, one partial side of the stopper 230 may be used as a second support surface 250 that is in contact with and closely supports a portion of the cutting tool 20. As shown in FIG. 9, when the stopper 230 is disposed at one end of the multi-directional vise device 1000, the power tool 20 may be closely supported on the second support surface 250 to cut the length of the specimen 10.

Here, the present disclosure may use the multi-directional vise device 1000, which includes the above features, to thus guide the cutting in the multiple directions while fixing the specimen 10 to be cut to the vise device.

Next, a method of cutting multi-directional specimens 10 that may cut the specimen 10 in multiple directions using the multi-directional vise device 1000 in the present disclosure may include: step a) of seating the specimen 10 on a jig part 120 by disposing the specimen 10 to have a length direction parallel to a first direction; step b) of fixing the specimen 10 by adjusting a gap between a first body part 111 and a second body part 112 by using a compression part 140; step c) of guiding the cutting of the specimen 10 in the first direction by rotating an upper plate 200 for a guide part 210 of the upper plate 200 to be parallel to the first direction based on a rotation shaft 220; and step d) of guiding the cutting of the specimen 10 in a second direction by rotating the upper plate 200 for the guide part 210 of the upper plate 200 to be parallel to the second direction based on the rotation shaft 220.

First, as shown in FIG. 1, step a) may be performed to seat the specimen 10 on the jig part 120 of the multi-directional vise device 1000. In step a), the specimen 10 may be disposed to have the length direction parallel to the first direction, and then be seated on the jig part 120 by being disposed between the first body part 111 and the second body part 112. Here, the first body part 111 and the second body part 112 may be spaced apart from each other by a certain gap. Therefore, step a) may be performed by first seating the specimen 10 on the jig part 120 of either the first body part 111 or the second body part 112. In step a), the multi-directional vise device 1000 may hold the specimen 10 while being disposed at a position where a length of the guide part 210 of the upper plate 200 faces the first direction.

In addition, as shown in FIG. 5, step b) may be performed to fix the specimen 10 by narrowing the gap between the first body part 111 and the second body part 112 by using the compression part 140. The compression part 140 may narrow or widen the gap between the first body part 111 and the second body part 112. The pair of body parts may have positioned adjusted by the compression part 140 to face the specimen 10 seated on jig parts 121, 122. Here, the gap between the first body part 111 and the second body part 112 may be narrowed to a level of compressing the specimen 10, thus fixing the specimen 10 between the body parts while pressing the specimen 10.

In addition, step c) may be performed to guide the cutting of the fixed specimen 10 in the first direction by using the gap between the first body part 111 and the second body part 112. Here, in step c), the cutting in the first direction may be guided by the guide part 210 of the upper plate 200. Accordingly, as shown in FIG. 5, the upper plate 200 may be in a reference position where the guide part 210 faces the first direction. However, if the upper plate 200 is not in the reference position, step c) may be performed after disposing the upper plate 200 in the reference position by rotating the upper plate 200 based on the rotation shaft 220 in the first direction. In addition, the cut tool may be used to cut the specimen 10 along the guide part 210 in a length direction, which is the first direction. Here, the specimen 10 may be cut to a certain length in the first direction as needed, and cut to a length within the length of the guide part 210. In addition, as shown in FIG. 8, the cut length may be restricted by moving a stopper 230 of the upper plate 200 based on the length to be cut. Here, a portion of the specimen 10 that is cut in the first direction may include at least a welded part 11 of the specimen 10. That is, the present disclosure is to check the welded part 11 in the specimen 10, and may first cut the portion including the welded part 11 in the first direction.

Here, the length of the specimen 10 may be unnecessarily long. In this case, to facilitate work, the length of the specimen 10 may first be cut before performing step c), and step c) may then be performed. The length of the specimen 10 may be cut by cutting one end of the specimen 10 that protrudes outward from the body part 110 to match one end of the multi-directional vise device 1000 by using one end of the upper plate 200 and one end of the body part 110 which are positioned on the same line in the length direction of the specimen 10 fixed in the multi-directional vise device 1000. Here, when it is necessary to cut lengths of the two ends of the specimen 10, one end of the specimen 10 may be cut, the specimen 10 in the multi-directional vise device 1000 may then be rotated in an opposite direction for the other end of the specimen 10 to be disposed at one end of the multi-directional vise device 1000, and the other end of the specimen 10 that has yet to be cut may then be cut. In addition, as needed, the length cut of the specimen 10 may be performed prior to step a) or optionally performed between the respective steps.

In addition, when the specimen 10 is cut in the first direction, step d) may be performed to dispose the guide part 210 to be parallel to the second direction by rotating the upper plate 200 based on the rotation shaft 220 in the second direction. Step d) is a step to guide the cutting in the second direction using the guide part 210 by rotating the upper plate 200, rotated in the first direction in step c) as shown in FIG. 5, in the second direction as shown in FIG. 7. Referring to FIG. 7, the upper plate 200 may be rotated in the second direction by the rotation shaft 220 fixed to one edge of the first body part 111. That is, one edge of the upper plate 200 may be rotated while being fixed to the edge of the first body part 111. Due to this rotation of the upper plate 200, the guide part 210 may be disposed on the same vertical line as a cut part 130 of the first body part 111. Therefore, the upper plate 200 may be rotated at a position where a perforation of the guide part 210 and the cut part 130 of the first body part 111 communicate with each other in a vertical direction. Here, the cutting may be performed using the cutting tool, along the guide part 210 and the cut part 130, in a radial direction, which is the second direction of the specimen 10. Here, the cutting of the specimen 10 in the second direction may be the cutting in the second direction starting from one end of the cutting in the first direction. In more detail, as shown in FIG. 1, in step c), the specimen 10 may be cut to the certain length in the first direction at its central portion. In addition, in step d) at one end of the cut portion of the specimen 10, a predetermined length may be cut in the second direction, which is the radial direction vertical to the first direction. Here, the cutting of the specimen 10 that is performed in step d) may be performed on a portion of the specimen 10 in the radial direction, e.g., cutting only about half of the specimen 10 rather than cutting the entire specimen 10.

The specimen 10 cut according to the method described above may be cut in the first direction to include the welded part 11 of the specimen 10, and only a portion of the specimen 10 may be cut at its one end cut in the first direction in the second direction vertical to the first direction. Accordingly, as shown in FIG. 1, the inside of the specimen 10 may be checked by opening the inside between the cut portions, and the welded part 11 of the specimen 10 may thus be tested. In addition, when a welding quality is checked in a quality test of the welded part 11 of the specimen 10 by using the multi-directional vise device 1000 in the present disclosure, subsequent welding of the specimen 10 may be ordered to be performed automatically or manually under the same condition.

As set forth above, the present disclosure provides the multi-directional vise device and the method of cutting the multi-directional specimens using the same, in which as the vise device that may accurately and easily assist with the cut position of the specimen in at least the length direction and the direction vertical thereto, the multi-directional vise device is a device that assists in making the specimen-cutting work more accurate and precise by including the replaceable jig part to thus fix the specimen firmly without any restriction on the external shape of the specimen, including the pair of body parts facing each other in the length direction to thus guide the cutting in the length direction by the feature of the body part, and also including the cut part in a portion of the body part to thus guide the cutting in the vertical direction, thereby guiding the cutting in the multiple directions while fixing the specimen in one position.

The spirit of the present disclosure should not be interpreted as being limited to the embodiments described above. The present disclosure may be applied to various fields and may be variously modified by those skilled in the art without departing from the scope of the present disclosure claimed in the claims. Therefore, it is obvious to those skilled in the art that these alterations and modifications fall within the scope of the present disclosure.

## Claims

1. A multi-directional vise device, which holds and guides a specimen having a length in one direction to cut the specimen in multiple directions, the device comprising:
a first body part and a second body part facing each other and spaced apart from each other by a certain gap in a second direction vertical to a first direction while having the first direction, which is a length direction of the specimen, as a reference axis;
at least one jig part disposed in each portion of the first body part and the second body part that accommodates the specimen; and
a compression part adjusting the gap between the first body part and the second body part,
wherein at least one of the first body part and the second body part has at least a portion of its upper side that includes a cut part formed in the second direction.

2. The device of claim 1, wherein the first body part includes the cut part, and the jig part is divided into two by the cut part.

3. The device of claim 1, further comprising an upper plate disposed on the body part, accommodating the first body part and the second body part together, and including a guide part perforated in the upper plate in the first direction.

4. The device of claim 3, wherein the upper plate includes a rotation shaft fixed thereto together with the body part, and
the upper plate is rotated based on the rotation shaft in the first direction or the second direction.

5. The device of claim 4, wherein the upper plate has a shape of a rectangle having a longer length in the first direction, and
the rotation shaft is fixed to the upper plate together with the body part in a predetermined portion between a position close to a central portion of the upper plate in the length direction among edges of the upper plate, and an edge of the body part including the cut part.

6. The device of claim 3, wherein the upper plate further includes a stopper having a length in the second direction, and movable on the upper plate in the first direction.

7. The device of claim 6, wherein the upper plate includes a sliding groove disposed in each of two sides of the upper plate in the second direction and having a length in the first direction, and
each of two ends of the stopper is fixed to each sliding groove, and slid on the upper plate.

8. The device of claim 3, in which one end of the upper plate is on the same line as one end of each of the first body part and the second body part, further comprising an upper plate fixing part fixing the position of the upper plate by being disposed on one side of the body part, which includes the cut part, and by being in surface contact with a side of the body part and a side of the upper plate together.

9. The device of claim 1, wherein the jig part has an inner circumferential surface formed along an outer circumference of the specimen.

10. The device of claim 9, wherein the specimen includes a welded part welded along a circumference of at least a portion of the specimen, and
the jig part includes a weld groove accommodating the welded part.

11. The device of claim 9, wherein the jig part is detachable from the body part.

12. The device of claim 1, wherein the compression part has a cylindrical structure.

13. A method of cutting multi-directional specimens using the multi-directional vise device of claim 3, the method comprising:
step a) of seating the specimen on a jig part by disposing the specimen to have a length direction parallel to a first direction;
step b) of fixing the specimen by adjusting a gap between a first body part and a second body part by using a compression part;
step c) of guiding the cutting of the specimen in the first direction by rotating an upper plate for a guide part of the upper plate to be parallel to the first direction based on a rotation shaft; and
step d) of guiding the cutting of the specimen in a second direction by rotating the upper plate for the guide part of the upper plate to be parallel to the second direction based on the rotation shaft.
